# EUROPEAN PATENT APPLICATION

(11) **EP 4 360 918 A1**
(43) Date of publication of application: **01.05.2024**
(21) Application number: 22315245.5
(22) Date of filing: 25.10.2022
(51) Int. Cl.: B60D 1/145, B60D 1/24

(54) **MINING TRAILER, MINING VEHICLE AND METHOD**

(71) Applicant: Sandvik Mining and Construction Lyon SAS, 69330 Meyzieu (FR)
(72) Inventor: Barraud, Rémy, 69330 MEYZIEU (FR); Demia, Laurent, 69330 MEYZIEU (FR)
(74) Representative: Sandvik

(57) **Abstract**

A mining trailer, mining vehicle, and a method for towing the mining trailer in a mine. The mining trailer (10) comprises a chassis (11) provided with at least one turnable swiveling wheel assembly (15) and one or more balancing devices (19) for controlling movements of the mining trailer in relation to a mining vehicle (1) towing the trailer. The balancing device comprises at least one actuator (20, 20a) for forcing the chassis to move relative to the mining vehicle in lateral directions.

## Description

### Background of the invention

The invention relates to a mining trailer for carrying mining equipment and being towable by a mining vehicle in a mine.

The invention further relates to a mining vehicle for underground mines and a method for towing a mining trailer in a mine.

The field of the invention is defined more specifically in the preambles of the independent claims.

In mines different type of mining vehicles are used for executing different mining tasks and operations. There exists a need to move the mining vehicles in the mines to different work sites and other locations. The mining vehicles may be driven along different mine galleries which may comprise narrow, curved, and sloped sections. In some cases, it may be desirable to place additional mining devices and equipment on a trailer which can be towed by the mining vehicle. However, the known solutions have shown some disadvantages.

### Brief description of the invention

An object of the invention is to provide a novel and improved mining trailer, mining vehicle, and a method for towing a mining trailer.

The mining trailer according to the invention is characterized by the characterizing features of the first independent apparatus claim.

The mining vehicle according to the invention is characterized by the characterizing features of the second independent apparatus claim.

The method according to the invention is characterized by the characterizing features of the independent method claim.

An idea of the disclosed solution is that a chassis of a mining trailer comprises one or more swiveling wheel assemblies. The swiveling wheel assembly comprises at least one wheel having rotation axis. The assembly is turnable around turning axis being transverse to the rotation axis of the wheel and being transverse to longitudinal axis of the trailer. The mining trailer is also provided with one or more balancing devices for actively controlling movements of the mining trailer in relation to a mining vehicle arranged to tow the trailer. The balancing device comprises one or more actuators configured to force the chassis of the trailer to move relative to the towing mining vehicle in lateral directions.

In other words, the swiveling wheel assembly comprises one or more wheels and an axle of the wheels. The one or more wheels and their rotation axles can turn around the turning axis and in relation to the chassis. Typically, the swiveling wheel assembly comprises only one wheel, but it may comprise twin wheels too.

An advantage of the disclosed solution is that the mining trailer has improved managing properties in narrow mine galleries, which may also comprise curves and slopes, and wherein circumstances and visibility are often quite difficult. The mine vehicles are driven in mine galleries in forward and backward directions and especially reversing with the towed mining trailer is much easier when the disclosed solution is implemented.

One advantage of the use of the balancing device is that the mining trailer can be steered even without being moved in longitudinal direction i.e., forwards or backwards.

The swiveling wheel assembly of the mining trailer implements a passive or indirect steering principle since the turning is resulted from the realized lateral movements of the chassis and not by direct control of the swiveling wheel assembly.

The relative movements are due to actuation of the one or more actuators of the balancing device;

According to an embodiment, the trailer comprises only wheels being of the swiveling wheel type. Thus, the trailer comprises no other type of wheels for executing normal drive in the mine.

According to an embodiment, the trailer is movable laterally in relation to its longitudinal direction since the one or more swiveling wheels can turn in relation to the chassis. This turning movement can be due to an offset between axis i.e., the turning axis is transverse with an offset to horizontal rotation axis direction of at least one wheel of the swiveling wheel assembly and transverse to longitudinal axis of the trailer.

According to an embodiment, the turning axis of the swiveling wheel is vertical or substantially vertical in relation to a driving surface.

According to an embodiment, the swiveling wheel serves as a load carrying wheel during the use of the trailer. This means that all vertical loads are transmitted to the driving surface through the one or more swiveling wheels. Thereby, the swiveling wheel is not a parking aid or is not serving only as a balancing element.

According to an embodiment, the mining equipment carried by the mining trailer may comprise one or more of the following devices, tools, or items: extra battery, electric power storage, electric power generator, fuel cell, power pack, compressor, pump, pump station, reel, water reel, cable reel, drilling tools, drilling tool handler, drilling tool magazine, rock bolt magazine, cable bolt reel, shotcreting device, shotcreting material, explosive storage, bulk resin or bulk cement factory, injection cartridge system or storage. The mentioned battery and energy storing and generating means are also mining equipment or devices since they relate to execution of mining measures and tramming in the mine.

According to an embodiment, the balancing device of the trailer is configured to steer the chassis or the swiveling wheel assembly and to thereby influence driving direction of the mining trailer.

According.to an embodiment, the balancing device of the trailer is configured to steer the chassis or the swiveling wheel assembly in accordance with steering direction of the mining vehicle.

According to an embodiment, the balancing device is configured to stabilize and balance the chassis in relation to movements of the towing mining vehicle. Thus, the balancing device may stabilize the trailer provided with one single swiveling wheel assembly, which single wheel type trailer is not stabile as such. The balancing device may also dampen the movements of the trailer during the tramming and can thereby improve driving characteristics.

According to an embodiment, the swiveling wheel assembly comprises an actuator for rotating the wheel around its rotation axis, whereby the swiveling wheel is provided with a traction feature i.e., the wheel can be rotated around its horizontal rotation axis. This way the wheel can be driven independently in relation to movements of the mining vehicle, whereby the trailer can be moved laterally even in situation when the mining vehicle is stopped. The actuator may be a hydraulic or electrical motor for example.

According to an embodiment, the mining trailer comprises only one wheel being the swiveling wheel assembly. In other words, the trailer is supported to the driven surface by means of the single swiveling wheel assembly only. Then the structure may be light weight and simple. In this disclosed one wheel embodiment other degrees of freedom of movements of the trailer are handled by a link between the tow bar and the vehicle providing thereby support and balancing the trailer.

According to an embodiment, the mining trailer comprises exclusively two swiveling wheel assemblies arranged at the same position in longitudinal direction of the mining trailer and at a distance . from each other in transverse direction. In other words, the two swiveling wheel assemblies are on opposite sides of a central longitudinal line of the chassis and there is the transverse distance between the swiveling wheel assemblies to allow them to be turned around their turning axis without colliding each other. An advantage of this embodiment is that by using two swiveling wheel assemblies instead of one load carrying capacity and stability of the mining trailer can be improved.

According to an embodiment, the at least one swivel wheel assembly is freely turnable around the turning axis in accordance with movements or the chassis. In other words, the turning movement of the swivel wheel assembly is not limited whereby it can turn full 360 degrees and can also revolve unlimited revolutions.

According to an alternative solution, the turning movement of the swivel wheel assembly is limited and is provided with a range of turning angle.

According to an embodiment, the turning movement of the swivel wheel assembly can be selectively blocked. The blocking can be done temporarily for improving stability of the trailer, or the blocking can be implemented during parking.

According to an embodiment, the turning axis of the at least one swivel wheel assembly is located at on offset in relation to the rotation axis parallel with a driving surface, whereby the turning axis and the rotation axis of the wheel do not intersect. An advantage of the offset is that the swiveling wheel assembly is configured to automatically turn around the turning axis when the chassis changes its direction of movement. This type of swiveling wheel assembly may also be called as a jockey wheel, or simply as a swivel wheel or articulated wheel.

According to an embodiment, the balancing device comprises at least one hydraulic actuator configured to turn the chassis in lateral directions.

According to an alternative solution, the balancing device for turning the chassis may be an electric actuator, such as an electric linear actuator.

According to an embodiment, the mining trailer comprises a mounting adapter or plate at a free end of the towing bar. The mounting adapter is mountable releasable to the mining vehicle. The actuator for turning the chassis may be mounted between the trailer chassis and the mounting adapter so that there is no need mount one end of the actuator directly to the frame of the mining vehicle. The mounting adapter may also comprise required connections to hydraulic circuits, electric circuits, control system etc. so that coupling of the mining trailer is quick and simple. The mounting adapter may comprise quick coupling elements and joints for mechanical connections and for electric, hydraulic, pneumatic, and other connections.

According to an embodiment, the .mining trailer is provided with a steering control system configured to control the at least one balancing device for moving orientation of the mining trailer. In other words, the balancing actuator serves as a steering actuator, and the steering control system is configured to control the actuator for steering the mining trailer.

According to an embodiment, the steering control system is connectable to a hydraulic steering circuit of the mining vehicle and is configured to control operation of the at least one balancing actuator based on realized steering measures of the mining vehicle. The mining vehicle may be a frame steered vehicle comprising a front frame unit, a rear frame unit and an articulation between the frame units. One or more frame steering hydraulic actuators are arranged to turn the frame units of the mining vehicle relative to each other. Then the steering control system of the trailer may be connected to the hydraulic circuit of the frame steering cylinder of the vehicle and may provide hydraulic control commands to the balancing actuator for imitating steering movements of the vehicle. Properties of the balancing actuator and the steering control system are designed so that the mining trailer can be automatically steered by using same turning radius of the towing vehicle. Thus, the design and driving geometry of the towing vehicle is implemented for steering the trailer. Then it may be possible to avoid use of several sensors and the steering control may be simple. In this embodiment, active steering control may include just a by-pass for operator control or a valve to stop the balancing feature.

According to an embodiment, the steering control system provides a hydraulic link between the balancing actuator and a hydraulic steering actuator of the mining vehicle. The steering control system may comprise a selectable bypass for the hydraulic link. Thereby it is possible to lock the balancing actuator or to provide it with free movement, for example. The balancing actuator may also be connected to a mode allowing an operator to control and steer the trailer.

According to an embodiment, the steering control system is provided with one or more sensing means for sensing and monitoring relative positions of the mining vehicle and the mining trailer. There may also be sensing means for sensing relative positions of the front and rear frame units of the mining vehicle. Further, the steering control system may comprise at least one control unit which may generate steering control data and commands based on the sensing data and possible input kinematics data. Then, based on executed calculations or other processing, the control unit can control the balancing actuator for steering the mining trailer. The steered balancing actuator may be hydraulic or electrical actuator.

According to an embodiment, the steering control system is provided with selectable automatic control mode and manual control mode. In the automatic control mode, the trailer may be steered in accordance with the steering movements of the mining vehicle and by considering dimensions and kinematics of the mining vehicle and the mining trailer. In the manual control mode, an operator of the mining vehicle may take the control and may steer the mining trailer into desired orientations relative to the mining vehicle. The operator may thus turn the mining trailer even though no steering measures of the mining vehicle occur.

According to an embodiment, at least one balancing device is arranged to adjust tilting angle of the mining trailer according to tilting angle of the towing mining vehicle, and/or according to tilting angle between the tow bar and the longitudinal axis of the towing mining vehicle. There may be one or more balancing devices on the trailer for situations where the towing mining vehicle and the mining trailer are driving on differently inclined driving surfaces. Then the balancing device can compensate tilting effect caused by the geometry of the articulation between the trailer and the mining vehicle and can level the mining trailer or adjust it to suitable angular position.

According to an embodiment, the trailer may comprise one or more first balancing devices for lateral steering purposes and one or more second balancing devices for tilting and levelling purposes.

According to an embodiment, the mining trailer is provided with a tilting control system configured to control the tilting angle of the mining trailer according to sensing data received from one or more sensors, such as inclinometers.

According to an embodiment, the mining trailer is provided with a third wheel, jack or support which may be connected to a tow bar or to a chassis for helping to handle the trailer when being uncoupled from a mining vehicle.

According to an embodiment, at least one swiveling wheel of the mining trailer is provided with a brake. The brake increases safety and can be used during the drive or parking or both.

According to an embodiment, at least one swiveling wheel of the mining trailer is motorized whereby it can be implemented to increase traction force of the mining vehicle.

According to an embodiment, at the end of each linear actuator there may be a specific bearing or joint to fit with the kinematics.

According to an embodiment, the balancing device of the trailer comprises at least one actuator which can be selectively implemented for turning the chassis in accordance with the steering movement and for tilting the chassis in accordance with the sloping angles.

According to an embodiment, the disclosed solution relates also to a mining vehicle for underground mines. The mining vehicle is of frame steered type and comprises: a front frame unit, a rear frame unit and a steering articulation between the frame units; at least one steering actuator in connection with the steering articulation for generating steering movement between the front and rear frame units; and a mining trailer releasably coupled to the rear frame and being towable by the mining vehicle. Further, the mining trailer is in accordance with the features and embodiments disclosed in this document.

According to an embodiment, the at least one steering actuator of the mining vehicle is hydraulically operable and is connected to a hydraulic circuit. The mining trailer comprises at least one hydraulic actuator for turning the mining trailer in relation to the rear frame unit. Further, the hydraulic actuator of the mining trailer is connectable via a steering control system to the hydraulic circuit of the mining vehicle and is configured to generate the turning movements in accordance with the steering movements of the mining vehicle.

According to an embodiment, the mining vehicle has selectable turning radiuses in response to the steering movements and the mining trailer is configured to follow realized turning radius of the mining vehicle under control of a steering control system.

According to an embodiment, the solution relates also to a method for towing a mining trailer. The method comprises coupling the mining trailer selectively to a rear end part of a mining vehicle and towing the mining trailer by means of the mining vehicle. Further, the method comprises: supporting a chassis of the mining trailer to a driving surface by means of at least one swiveling wheel assembly being capable to turn in relation to the chassis; and steering the mining trailer by forcing the chassis of the mining trailer to turn in relation to the mining vehicle.

According to an embodiment, the method comprises moving the mining trailer selectively in lateral direction when the mining vehicle is stopped.

According to an embodiment, the method comprises tilting the mining trailer in accordance with tilting movement of the mining vehicle and/or according to tilting angle between the tow bar and the longitudinal axis of the towing mining vehicle by forcing the chassis of the mining trailer to tilt in relation to a frame of the mining vehicle.

According to an alternative embodiment, which is not in accordance with the claims, the balancing device comprises at least one actuator configured to turn the swiveling wheel assembly in relation to the chassis. Thus, in this embodiment steering forces are transmitted directly to the swiveling wheel assembly and not to the chassis as in the other embodiments. There may be a linear actuator, such as a hydraulic cylinder or an electrical linear actuator connected to turn the swiveling wheel assembly. Alternatively, a hydraulic or electrical motor may be implemented for generating to steering movement. Further, when the disclosed direct steering principle is implemented, the swiveling wheel assembly is not of freely rotating type and the structure may be without the offset between the rotating axle and the turning axle. The rotating axle and the turning axle can intersect. The wheel of the swiveling wheel assembly may be located directly below the turning axle actuated by one of the mentioned steering actuators.

The above disclosed embodiments may be combined to form suitable solutions having those of the above features' that are needed.

### Brief description of the figures

Some embodiments are described in more detail in the accompanying drawings, in which
Figure 1 is a schematic side view of an underground rock drilling rig,
Figure 2 is a schematic side view of a loading machine,
Figure 3 is a schematic side view of a mining trailer towed by means of a mining vehicle,
Figures 4 and 5 are schematic top views illustrating turning movements of a mining trailer and its swivelling wheel assemblies,
Figure 6 is a schematic top view of a mining trailer comprising a balancing device with two actuators for turning the mining trailer,
Figure 7 is a schematic top view of a mining trailer comprising only one swivelling wheel assembly,
Figures 8 and 9 are schematic side views of a swivelling wheel assembly provided with an offset feature and seen in two different directions,
Figure 10 is a schematic side view of a swivelling wheel assembly provided with two wheels,
Figure 11 is a schematic side view of a swivelling wheel assembly without an offset feature,
Figures 12 and 13 are schematic side views of two swivelling wheel assemblies provided with turning actuators for changing their direction,
Figure 14 is a schematic top view of a frame steered mining vehicle,and a mining trailer towed by it,
Figure 15 is a schematic top view of a situation wherein a frame steered mining vehicle provided with a mining trailer is operating in a mine gallery,
Figures 16 and 17 are schematic side views of a mining trailer comprising balancing means for adjusting inclination angle of the mining trailer when driving sloping drive surfaces, and
Figure 18 is a schematic side view of a mining trailer provided with a balancing device comprising an actuator with selectable usage positions and implementations.

For the sake of clarity, the figures show some embodiments of the disclosed solution in a simplified manner. In the figures, like reference numerals identify like elements.

### Detailed description of some embodiments

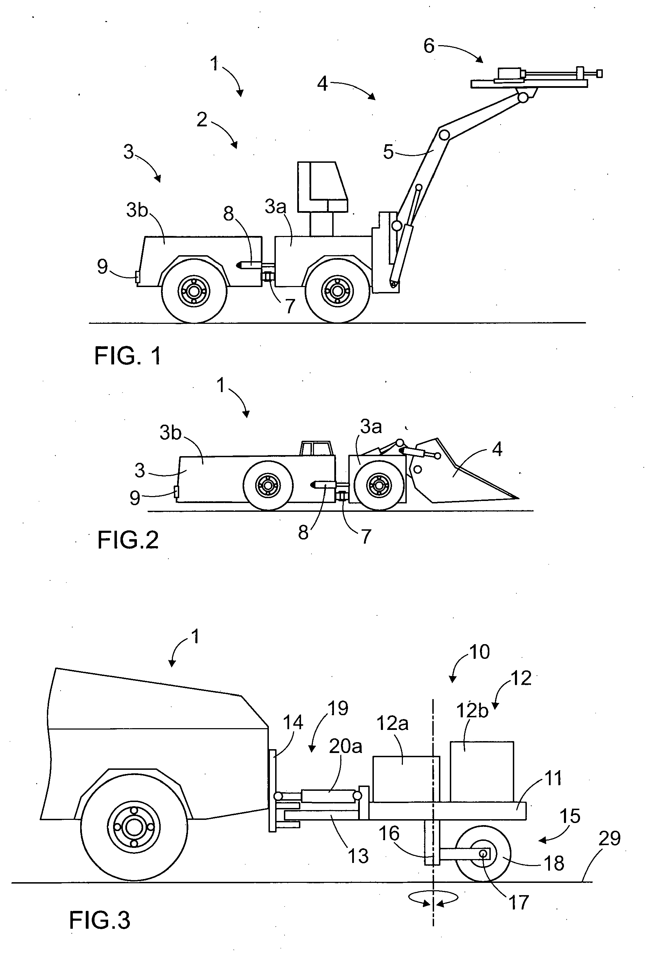

Figure 1 discloses a mining vehicle 1, which is a rock drilling rig 2 provided with a movable carrier 3 and one or more mining work devices 4. In this case there is onedrilling boom 5 provided with a rock drilling unit 6. However, there may be several booms provided with rock drilling unts and rock bolting units.

Figure 2 discloses a load haul dump vehicle (LHD) which is also a mining vehicle 1. The vehicle 1 is provided with a movable carrier 3 and a bucked serves as a mining work device 4.

The mining vehicles disclosed in Figures 1 and 2 may be intended for underground mines and their carriers 3 may be of frame steered type comprising a front frame unit 3a, a rear frame unit 3b and a steering articulation 7 between the frame units 3a, 3b. One or more steering actuators 8 are arranged in connection with the steering articulation 7 for generating steering movement between the front and rear frame units 3a, 3b. The rear frame units 3b may comprise a coupling device or place 9 for coupling a mining trailer releasably to the mining vehicle 1. The mining trailer is in accordance with the features and properties disclosed in this document.

The mining vehicle 1 may be electrically operable, whereby the mining trailer may be provided with onboard energy storages, such as batteries. Then the stored electric energy onboard the mining trailer can be utilized when the mining vehicle 1 is trammed to planned drilling work sites along sloped ramps and mine galleries in different type of mines, such as in underground mines.

Figure 3 discloses a mining trailer 10 connected to a mining vehicle 1. The mining trailer 10 comprises a wheeled chassis 11 for carrying mining equipment 12. The mining equipment 12 may relate to actual drilling and rock handling operations or to tramming of the mine vehicle 1 in a mine, for example. In Figure 3 there are two mining equipment units 12a, 12b.loaded on the trailer 10. A first unit 12a may be an electrical battery for providing additional energy for tramming the mining vehicle 1 by means of electrical drive motors. A second unit 12b may comprise material and devices for facilitating rock reinforcement operations, for example. A tow bar 13 of the mining trailer 10 is connectable releasably to a rear part of a mining vehicle 1 for towing the mining trailer 10. There may be a coupling adapter 14 mounted to the tow bar 13 and connectable to the mining vehicle 1. Quick coupling means can be utilized in the coupling. The chassis 11 is provided with one or more swiveling wheel assemblies 15. Each swiveling wheel assembly 15 is turnable around turning axis 16 being transverse to rotation axis 17 of one of more wheels 18 of the swiveling wheel assembly 15. The turning axis 16 is also transverse to longitudinal axis of the trailer 10. The swiveling wheel assembly 15 supports the mining trailer 10 on a driving surface 29 and serves as a main load carrying element for the chassis 11.

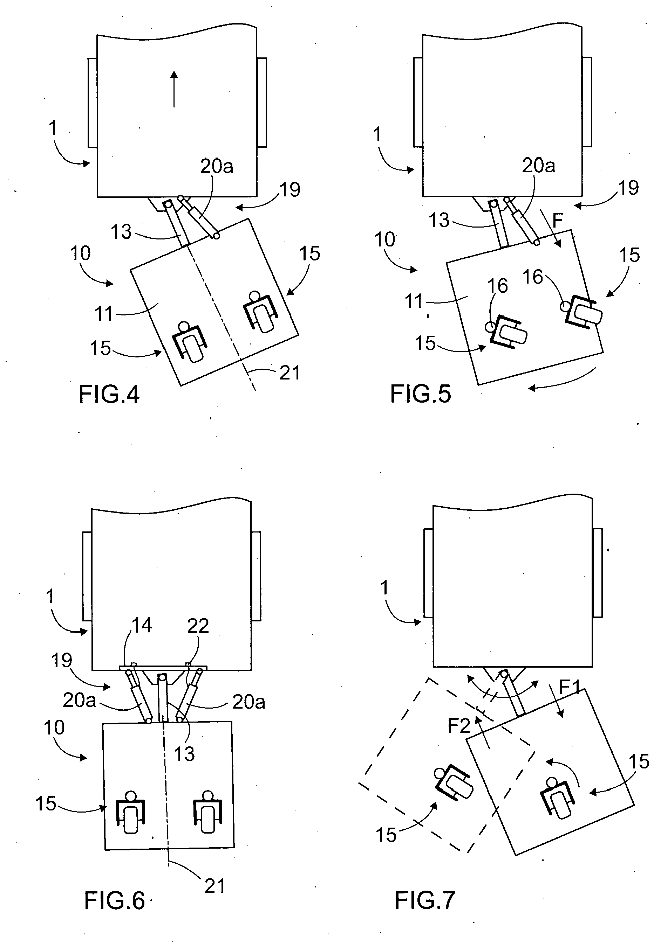

The mining trailer 10 is also provided with at least one balancing device 19 for actively controlling movements of the mining trailer 10 in relation to the mining vehicle 1. The balancing device 10 comprises at least one actuator 20a configured to force the chassis 11 of the trailer 10 to move relative to the towing mining vehicle 1 in lateral directions, as it is shown for example in Figures 4 - 7. There are several different ways for controlling operation of the balancing device 19.

In Figures 4 - 7, which are top views, the swiveling wheel assemblies 15 are for clarity reasons shown even though they are typically located below the chassis 11 and are therefore not seen when the mining trailer 10 is examined from above.

In Figures 4 - 6 the mining trailers 10 comprise two swiveling wheel assemblies 15 arranged symmetrically in relation to longitudinal axis 21 of the mining trailer 10. In Figure 7 only one swiveling wheel assembly 15 is carrying loads of the mining trailer 10.

In Figure 4 the mining trailer 10 is towed by the mining vehicle 1 in forward direction and the mining trailer 10 follows the mining vehicle 1 along a substantially similar drive path, which is in this case curved. The balancing device 19 keeps the mining trailer 10 on the same track. Then the swiveling wheel assemblies 15 can automatically follow the movement of the chassis 11.

Figure 5 discloses that the chassis 11 of the mining trailer 10 can be turned by means of an actuator 20a of the balancing device 19 and the movement of the chassis 10 does not require necessarily any forward or reverse movement of the mining vehicle 1. Thus, turning during a stoppage is possible. The swiveling wheel assemblies 15 can turn relative to their turning axis 16 when the chassis 11 is turned, as it is indicated in Figure 5. Turning force generated by the actuator 20a is indicated by a reference numeral F.

In Figures 4 and 5 only one actuator 20a is implemented for turning and balancing movements of the chassis 11 of the mining trailer 10. In Figure 6 there are two actuators 20a, which may be in some constructions and situations beneficial. Figure 6 also discloses that there may be a coupling adapter 14 which may comprise connecting elements for the actuators 20a and for a tow bar 13 as well as connectors 22 for hydraulic lines and electrical connections.

In Figure 7 no actuators of a balancing device are shown for clarity reasons, but use of two actuators may improve stability and driving properties. The actuators can generate pushing and pulling forces indicated as F1 and F2. When the chassis 11 is affected by these forces and starts to turn, then the swiveling wheel assembly 15 also initiates its turning motion.

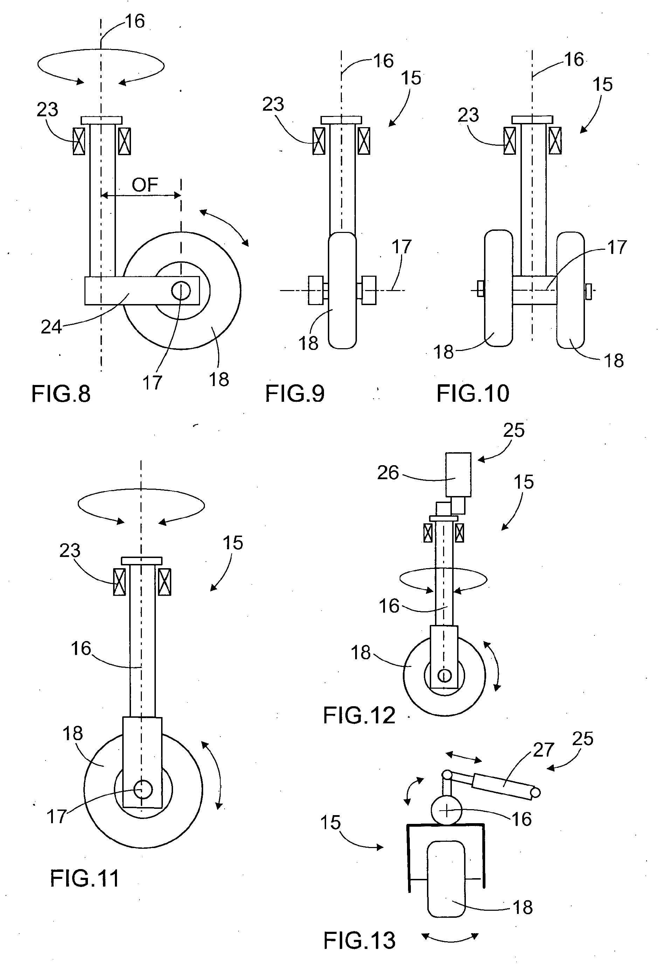

Figures 8 and 9 disclose a swivelling wheel assembly 15 provided with an offset feature OF. This means that a turning axis 16 and a rotation axis 17 do not intersect. When the turning axis 16, which is connected to a chassis of a mining trailer by means of bearings 23, is moved, then torque is generated to turn the swiveling wheel assembly 15 to allow free rotation of a wheel 18. There may be a transverse link 24 or connecting part between the turning axis 16 and the rotation axis 17. The turning axis 16 may comprise a turning shaft and the rotation axis 17 may comprise a rotation shaft. Magnitude of the torque turning the assembly 15 is dependent on length of the transverse link 24.

Figure 10 discloses a swivelling wheel assembly 15 provided with two wheels 18. All the other features may be in accordance with the Figures 8 and 9.

Figure 11 discloses a swivelling wheel assembly 15 without an offset feature. Then there may any other arrangement for making a wheel 18 to turn when a chassis of a mining trailer turns.

Figures 12 and 13 disclose swivelling wheel assemblies 15 provided with turning actuators 25 for changing direction of their wheels 18. In Figure 12 there is a motor 26 for turning a turning axis 16. The motor 26 may be an electrical or hydraulic motor. In Figure 13 the turning actuator 25 is a hydraulic cylinder 27. Alternatively, it may be an electric linear actuator, for example. When the turning actuator 25 is implemented, the solution may or may not comprise the above mentioned offset feature.

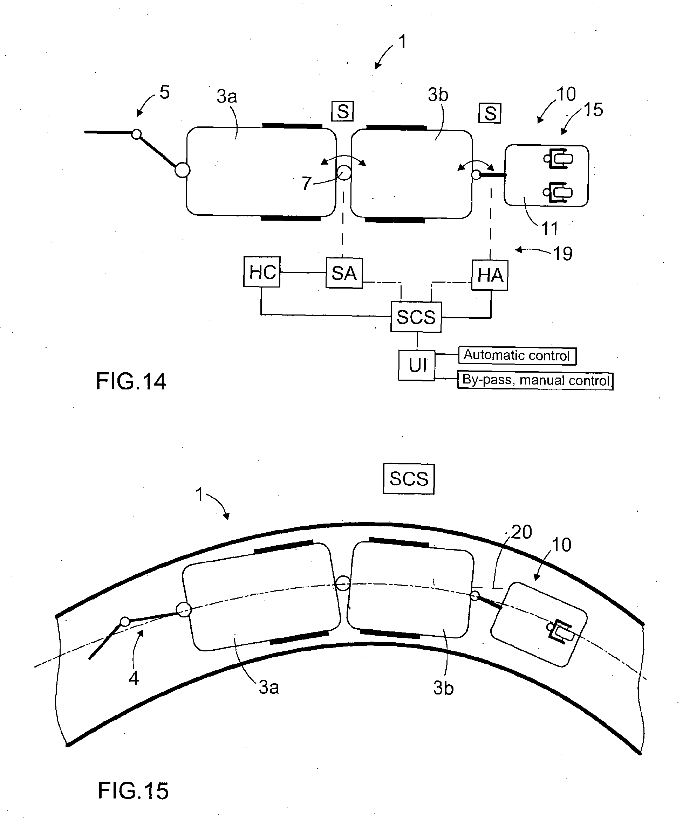

Figure 14 discloses a frame steered mining vehicle 1 and a mining trailer 10 towed by it. The mining vehicle 1 may be a rock drilling rig 2 comprising a drilling boom 5 and wherein a first frame unit 3a and second frame unit 3b are connected to each other by means of a steering articulation 7. The frame parts 3a, 3b are turned relative to each other by means of a steering actuator SA which is connected to a hydraulic circuit HC and is controlled under control of an operator or automatic control system of the mining vehicle. The mining trailer 1.0 comprises a balancing device 19 provided with a hydraulic actuator HA serving as an actuator for turning chassis 11 of the mining trailer 10. The hydraulic actuator HA is controlled by a steering control system SCS. The hydraulic actuator HA is' connected to the hydraulic circuit HC via the steering control system SCS. The steering control system SCS may be provided with selectable automatic control modes and by-pass or manual modes. In connection with the steering articulation 7 and a coupling joint 28, which is between the mining vehicle 1 and the mining trailer 1, may be sensing devices or sensors S. Sensing data of the sensors S may be transmitted to the steering control system SCS which can take the sensing data into account when generating control data for the hydraulic actuator HA.

The steering control system SCS may be a hydraulic valve or valve arrangement configured to control feed of hydraulic fluid to the hydraulic actuator HA in response to monitoring data received from the steering actuator SA. There may be a hydraulic link between the steering system of the mining vehicle 1 and the balancing device 19 of the mining trailer 10 so that the mining trailer 10 can actively imitate movements of the mining vehicle 1 when driving in curves. The hydraulic link may be a default setting and can be interrupted by connecting the by-pass mode. In the by-pass control mode, the mining trailer 10 can be turned even when the mining vehicle 1 is not moving. The by-pass control mode also allows the mining trailer 10 to be controlled in curve drive so that movement path of the mining trailer deviates from the one of the mining vehicle 1. In the normal automatic control mode, the hydraulic actuators or hydraulic fluid flows, or both, may be dimensioned so that the mining trailer 10 follows movements of the mining trailer 1 in a desired manner.

Alternatively, the steering control system SCS may comprise a control unit provided with a processor and being capable of producing control commands for the hydraulic actuator HA. The control unit of the steering control system SCS may be provided with a steering control program and stored data on kinematics of the mining vehicle 1. The control unit may also receive sensing data from the sensors S and instructions and control parameters given through a user interface UI.

Figure 15 discloses a frame steered mining vehicle 1 towing a mining trailer 10 in a narrow and curved mine gallery. A steering control system SCS can control movement of the mining trailer 10 so that it is moved along a same curving than the mining vehicle. When ever needed, the mining trailer 10 can also be turned independently. The independent turning may be utilized for example when reversing the mining vehicle 1 and in driving routes with especially narrow and difficult sections.

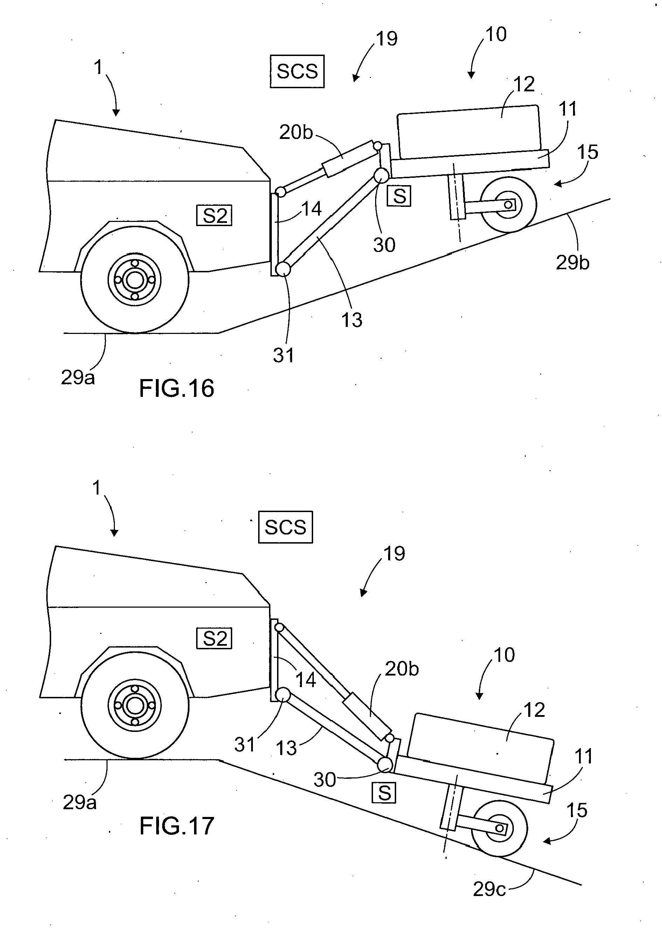

Figures 16 and 17 disclose situations wherein a mining vehicle 1 and a mining trailer 10 are moving on differently angled drive surfaces 29a, 29b and 29c. The mining trailer 10 may be in accordance with any one of the previous Figures, but in addition to the already disclosed features, a tow bar 13 may be connected to a chassis 11 of the mining trailer 10 by means of a first joint 30. Further, the tow bar 14 may comprise a second joint 31 at its distal end. The first joint 30 may have one degree of freedom i.e., turning movement up and down, and the second joint 31 may comprise at least two degrees of freedom i.e., turning movements up and down, as well as lateral turning movements. A third degree of movement of the second joint 31 may comprise torque. Then a tilting angle of the chassis 11 can be adjusted by means of a balancing device 19 comprising one or more actuators 20b and a steering control system SCS. The balancing device 19 can also dampen movements of the mining trailer 10, when driving on different driving surfaces and for example when sloping angle of the drive surface changes suddenly.

One or more sensors S may be arranged on the mining trailer 10 for sensing position of the mining trailer 10. The sensor S may be an angle sensor mounted in connection with the first joint 30, for example. Alternatively, or in addition to, there may be inclinometers and other sensing devices mounted on the mining trailer 10. Furthermore, the mining vehicle 1 may also comprise one or more onboard second sensing device S2 for determining tilting and position of the mining vehicle, whereby sensing data gathered by the second sensor S2 may be transmitted to the steering control system SCS and can be used for controlling the tilting of the mining trailer 10 based on the sensed tilting of the mining vehicle 1.

In Figures 16 and 17 no separate actuators of the balancing device for turning the chassis in lateral directions are disclosed. However, the balancing device may comprise separate actuators for adjusting the tilting and for lateral turning. It may also be possible to use integrated actuators capable to execute these both movements.

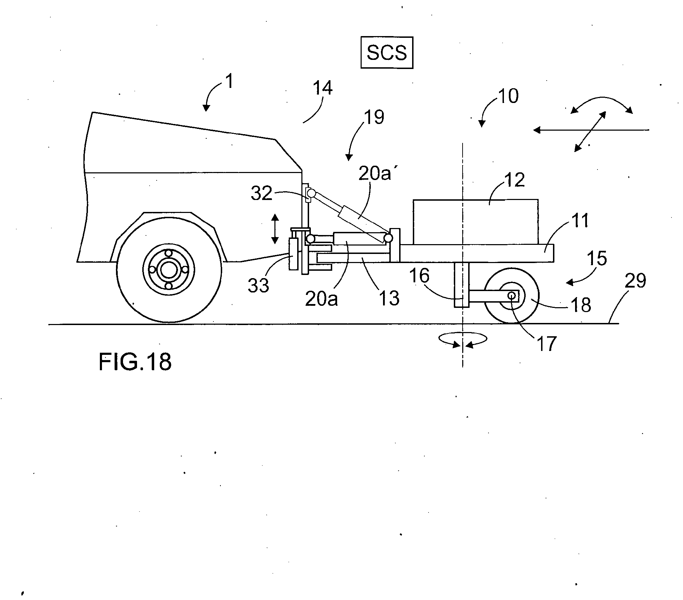

Figure 18 discloses a balancing device 19 wherein an actuator 20a for turning a trailer 10 laterally can be tilted so that it can be used also as a balancing or tilting angle adjusting actuator 20a'. The actuator 20a may be moved by means of a tilting actuator 33 on guide surfaces 33. The disclosed system can be controlled by means of a steering control system SCS. Thus, in this embodiment one actuator can be implemented in versatile manner.

The drawings and the related description are only intended to illustrate the idea of the invention. In its details, the invention may vary within the scope of the claims.

## Claims

1. A mining trailer (10) comprising:
a wheeled chassis (11) for carrying mining equipment (12);
a tow bar (13) connectable to a mining vehicle (1) for towing the mining trailer (10);
**characterized in that**
the chassis (11) is provided with at least one swiveling wheel assembly (15) turnable around turning axis (16) being transverse to rotation axis (17) of at least one wheel (18) of the swiveling wheel assembly (15) and transverse to longitudinal axis (21) of the mining trailer (10);
the mining trailer (10) is provided with at least one balancing device (19) for actively controlling movements of the mining trailer (10) in relation to the mining vehicle (1); and
the balancing device (19) comprises at least one actuator (20, 20a) configured to force the chassis (11) of the mining trailer (10) to move relative to the towing mining vehicle (1) in lateral directions.

2. The mining trailer as claimed in claim 1, **characterized in that**
the mining trailer (10) comprises only one wheel being the swiveling wheel assembly (15).

3. The mining trailer as claimed in claim 1 or 2, **characterized in that**
the mining trailer (10) comprises exclusively two swiveling wheel assemblies (15) arranged at the same position in.longitudinal direction of the mining trailer (10) and at a distance from each other in transverse direction.

4. The mining trailer as claimed in any one of the preceding claims 1 - 3, **characterized in that**
the at least one swivel wheel assembly (15) is freely turnable around the turning axis (16) in accordance with movements or the chassis (11).

5. The mining trailer as claimed in any one of the preceding claims 1 - 4, **characterized in that**
the turning axis (16) of the at least one swivel wheel assembly (15) is located at on offset (OF) in relation to the rotation axis (17) parallel with a driving surface, whereby the turning axis (16) and the rotation axis (17) of the wheel (18) do not intersect.

6. The mining trailer as claimed in any one of the preceding claims 1 - 5, **characterized in that**
the balancing device (19) comprises at least one hydraulic actuator (HA) configured to turn the chassis (11) in lateral directions.

7. The mining trailer as claimed in any one of the preceding claims 1 - 6, **characterized in that**
the mining trailer (10) is provided with a steering control system (SCS) configured to control the at least one balancing device (19) for moving orientation of the mining trailer (10).

8. The mining trailer as claimed in any one of the preceding claims 1 - 7, **characterized in that**
at least one balancing device (19) is arranged to adjust tilting angle of the mining trailer (10) according to tilting angle of the towing mining vehicle (1), and/or according to tilting angle between the tow bar (14) and the longitudinal axis of the towing mining vehicle (10).

9. A mining vehicle (1) for underground mines;
wherein the mining vehicle (1) is of frame steered type and comprises:
a front frame unit (3a), a rear frame unit (3b) and a steering articulation (7) between the frame units (3a, 3b) ;
at least one steering actuator (8, SA) in connection with the steering articulation (7) for generating steering movement between the front and rear frame units (3a, 3b); and
a mining trailer (10) releasably coupled to the rear frame (3b) and being towable by the mining vehicle (1);
**characterized in that**
the mining trailer (10) is in accordance with any one of the preceding claims 1 - 8.

10. The mining vehicle as claimed in claim 9, **characterized in that**
the at least one steering actuator (8, SA) is hydraulically operable and is connected to a hydraulic circuit (HC) ;
the mining trailer (10) comprises at least one hydraulic actuator (20, HA) for turning the mining trailer (10) in relation to the rear frame unit (3b); and
the hydraulic actuator (20, HA) of the mining trailer (10) is connectable via a steering control system (SCS) to the hydraulic circuit (HC) of the mining vehicle (1) and is configured to generate the turning movements in accordance with the steering movements of the mining vehicle (1) .

11. The mining vehicle as claimed in claim 9 or 10, **characterized in that**
the mining vehicle (1) has selectable turning radiuses in response to the steering movements and the mining trailer (10) is configured to follow realized turning radius of the mining vehicle (1) under control of a steering control system (SCS).

12. A method for towing a mining trailer (10),
wherein the method comprises coupling the mining trailer (10) selectively to a rear end part (3b) of a mining vehicle (1) and towing the mining trailer (10) by means of the mining vehicle (1);
**characterized by**
supporting a chassis (11) of the mining trailer (10) to a driving surface (29) by means of at least one swiveling wheel assembly (15) being capable to turn in relation to the chassis (11); and
steering the mining trailer (10) by forcing the chassis (11) of the mining trailer (10) to turn in relation to the mining vehicle (1).

13. The method as claimed in claim 12, **characterized by**
moving the mining trailer (10) selectively in lateral direction when the mining vehicle (1) is stopped.

14. The method as claimed in claim 12 or 13, **characterized by**
tilting the mining trailer (10) in accordance with tilting movement of the mining vehicle (1) and/or according to tilting angle between a tow bar (14) and the longitudinal axis of the towing mining vehicle (1) by forcing the chassis (11) of the mining trailer (10) to tilt in relation to a frame (3) of the mining vehicle (1).
